Europäisches Patentamt

European Patent Office

Office européen des brevets

(19)

(11) Veröffentlichungsnummer : **0 142 822**
**B1**

(12) **EUROPÄISCHE PATENTSCHRIFT**

(45) Veröffentlichungstag der Patentschrift :
04.03.87

(51) Int. Cl.⁴ : **B 60 N 1/06, A 47 C 7/38**

(21) Anmeldenummer : **84113787.0**

(22) Anmeldetag : **15.11.84**

(54) Vorrichtung zum Schutz des Kopfes von Fahrzeuginsassen bei Unfällen.

(30) Priorität : 18.11.83 DE 8333127 U

(43) Veröffentlichungstag der Anmeldung :
29.05.85 Patentblatt 85/22

(45) Bekanntmachung des Hinweises auf die Patenterteilung : 04.03.87 Patentblatt 87/10

(84) Benannte Vertragsstaaten :
DE FR GB IT SE

(56) Entgegenhaltungen :
DE-A- 2 035 013
DE-A- 2 152 202
FR-A- 2 191 500
US-A- 3 802 737

(73) Patentinhaber : Breitenbach, Dieter
Gelastrasse 94
D-6000 Frankfurt/Main (DE)

(72) Erfinder : Breitenbach, Dieter
Gelastrasse 94
D-6000 Frankfurt/Main (DE)

(74) Vertreter : Stoffregen, Hans-Herbert, Dr. Dipl.-Phys. et al
Patentanwälte Strasse & Stoffregen Salzstrasse 11a
Postfach 2144
D-6450 Hanau/Main 1 (DE)

EP 0 142 822 B1

## Beschreibung

Die Erfindung bezieht sich auf eine Vorrichtung zum Schutz des Kopfes von Fahrzeuginsassen bei Unfällen, die in einer ersten Endstellung als Kopfstütze ausgebildet ist, die einen Polsterüberzug hat.

Es ist bekannt, bei Kopfstützen in Fahrzeugen vor einem normalen Polsterkörper jeweils ein Kissen anzuordnen, das mit einem gasförmigen Medium gefüllt ist. Das Kissen ist durch eine Hülle mit dem Polsterkörper zu einer Einheit verbunden. Das gasgefüllte Kissen ist mit einem Überdruckventil versehen, durch das bei einem Aufprall eines Kopfes auf das Kissen, nach dem Überschreiten einer gewissen Belastungsgrenze Gas entweicht. Mit dieser Vorrichtung soll sowohl der Aufprall des Kopfes bei einem Unfall gemildert als auch eine Aufzehrung der Aufprallenergie erreicht werden, um das Zurückschleudern des Kopfes vom Kissen weitgehend zu beseitigen (DE-A-23 62 452).

Bekannt ist ferner eine Einrichtung zur Erhöhung der Sicherheit der Insassen von Fahrzeugen mit einer pneumatisch wirksamen Polsterung, die als Luftsack-Schutzelement an der Karosserie oder an den verlängerten Gerüsten der Sitzlehnen befestigt ist. Die Luftsack-Schutzelemente werden vorzugsweise erst bei Gefahr aufgeblasen. Sie sind hinter den Köpfen angeordnet und der Kopfform angepaßt. Die Luftsack-Schutzelemente sollen bei Unfällen das Abknicken der Köpfe nach den Seiten oder nach hinten verhindern und eine Art Schutzwall um den Kopf bilden (DE-A-15 55 142).

Der Erfindung liegt die Aufgabe zugrunde, eine Vorrichtung der eingangs beschriebenen Art derart weiterzuentwickeln, daß ein verbesserter Schutz auch bei von vorne oder auf die Seiten der Fahrzeuge einwirkenden Zusammenstößen und bei den nachfolgenden Fahrzeugbewegungen erreicht wird.

Die Aufgabe wird erfindungsgemäß dadurch gelöst, daß bei Kraftausübung auf die der Frontseite des Fahrzeugs zugewandte Mitte der Kopfstütze zwei im Inneren des Polsterüberzugs schwenkbar angeordnete Hebel aus ihrer ersten Endstellung unter Mitnahme des Polsterüberzugs in eine zweite Endstellung schwenkbar sind, in der die Hebel und der Polsterüberzug einen zumindest den hinteren Teil und die beiden Seiten des Kopfes umgebenden Helm bilden.

Die Vorrichtung wird bei einem Auffahrunfall auf die Rückseite des Fahrzeugs durch das Zurückschleudern des Kopfes automatisch betätigt. Es ist aber auch möglich, die Vorrichtung absichtlich zu betätigen, indem der Kopf nach hinten gepreßt wird. Eine derartige absichtliche Betätigung ist vor einem Zusammenstoß zweckmäßig, wenn die Gefahr eines Zusammenstoßes erkannt ist. Wenn sich z. B. ein Fahrzeug von der Seite mit großer Geschwindigkeit nähert, kann der Kopf in den Polsterüberzug gepreßt werden, wodurch die Kopfstütze zu einem Helm umgeformt wird, der den Kopf im Falle des Zusammenstoßes wirksam schützt. Vor einem frontalen Zusammenstoß ist es ebenfalls angebracht, den Kopf in das Polster zu drücken, um hierdurch den Helm umzulegen.

Vorzugsweise ist die Kopfstütze mit der Rückenlehne des jeweiligen Insassensitzes verbunden, wobei der durch Umformung der Kopfstütze gebildete Helm vom Insassensitz gelöst ist. Der Helm bietet bei allen Arten von Unfällen einen guten Schutz. Insbesondere bei den Folgebewegungen des Fahrzeugs nach der direkten Kollision, zum Beispiel beim Überrollen, Abstürzen an Böschungen und bei Mehrfachkollisionen, wird ein wesentlich besserer Schutz vor Kopfverletzungen erreicht. Diesen Schutz können die oben erwähnten bekannten Einrichtungen nicht oder nur in unzureichendem Maße bieten.

Eine zweckmäßige Ausführungsform besteht darin, daß die im Polsterüberzug angeordneten beiden Hebel, die den Umrissen des Kopfes entsprechend gekrümmt sind, um zwei parallel zueinander verlaufende Achsen schwenkbar sind, daß die Hebel an ihren einander zugewandten Enden zwei der Frontseite des Fahrzeugs zugewandte Betätigungsenden aufweisen und daß die Hebel mit dem sie umgebenden Polsterüberzug in der ersten Endstellung auseinandergespreizt und in der zweiten Endstellung unter Freilassung eines ovalen Bogens einander zugewandt sind. Diese Ausführungsform zeichnet sich durch ihren konstruktiv einfachen Aufbau aus. Sie läßt sich daher wirtschaftlich fertigen.

Bei einer günstigen Ausführungsform ist vorgesehen, daß die Hebel je mit einer Welle verbunden sind, die in einer mit der Rückenlehne des jeweiligen Fahrzeugsitzes verbundenen Führungsbahn verschiebbar angeordnet ist, die sich nur über einen Teil des Verschiebeweges der Welle erstreckt. Nach der Umformung der Kopfstütze in den Helm ist bei dieser Ausführungsform auf einfache Weise die Verbindung zwischen Helm und Rückenlehne gelöst.

Bei einer bevorzugten Ausführungsform sind die Hebel zu Helmhälften erweitert, die in der zweiten Endstellung den hinteren Teil, die Seiten und die Oberseite des Kopfes umgeben. Damit wird ein großer Teil des Kopfes bei Unfällen geschützt.

Zweckmäßigerweise sind die beiden Hebel in der zweiten Endstellung durch Schnappelemente miteinander verriegelt. Der Helm bildet eine selbständige Einheit, die äußeren Beanspruchungen einen großen Widerstand entgegensetzen. Die Verbindung kann später leicht wieder gelöst werden.

Bei einer günstigen Ausführungsform sind die Hebel mit Federn verbunden, durch deren Vorspannung die Hebel in ihrer ersten Endstellung gehalten sind.

Die Erfindung wird im folgenden anhand eines in einer Zeichnung dargestellten Ausführungsbeispiels näher beschrieben, aus dem sich weitere Merkmale sowie Vorteile ergeben.

Es zeigen :

Figur 1 einen Querschnitt durch eine Vorrichtung zum Schutz des Kopfes von Fahrzeuginsassen bei Unfällen, die in ihrer ersten Endstellung als Kopfstütze ausgebildet ist,

Figur 2 einen Schnitt längs der Linien I-I der in Fig. 1 dargestellten Vorrichtung,

Figur 3 einen Querschnitt durch eine Vorrichtung zum Schutz des Kopfes von Fahrzeuginsassen bei Unfällen, die in ihrer zweiten Endstellung als Helm ausgebildet ist,

Figur 4 eine Seitenansicht einer in ihrer zweiten Endstellung als Helm ausgebildeten Vorrichtung zum Schutz des Kopfes von Fahrzeuginsassen und

Figur 5 eine Ansicht von oben einer in ihrer ersten Endstellung, als Kopfstütze ausgebildeten Vorrichtung zum Schutz des Kopfes von Fahrzeuginsassen.

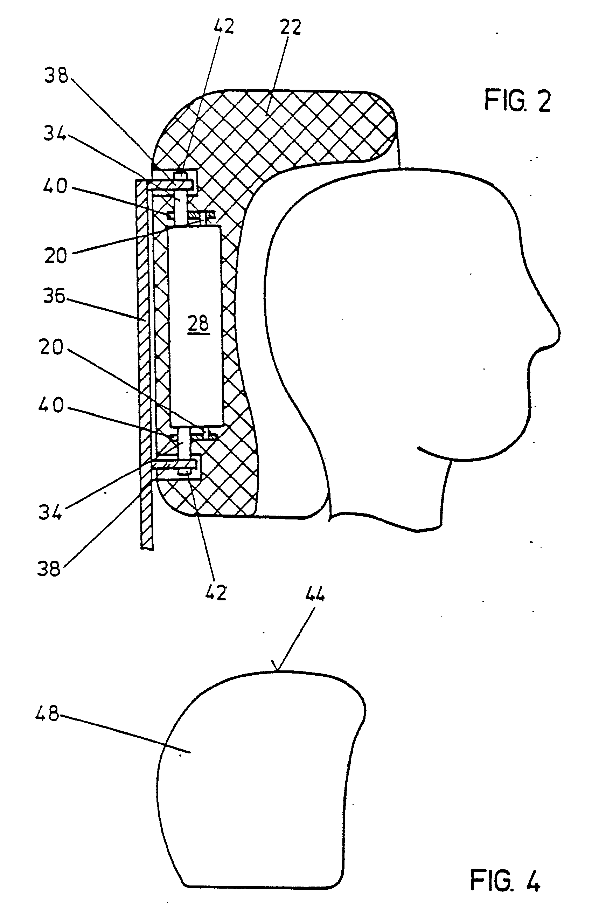

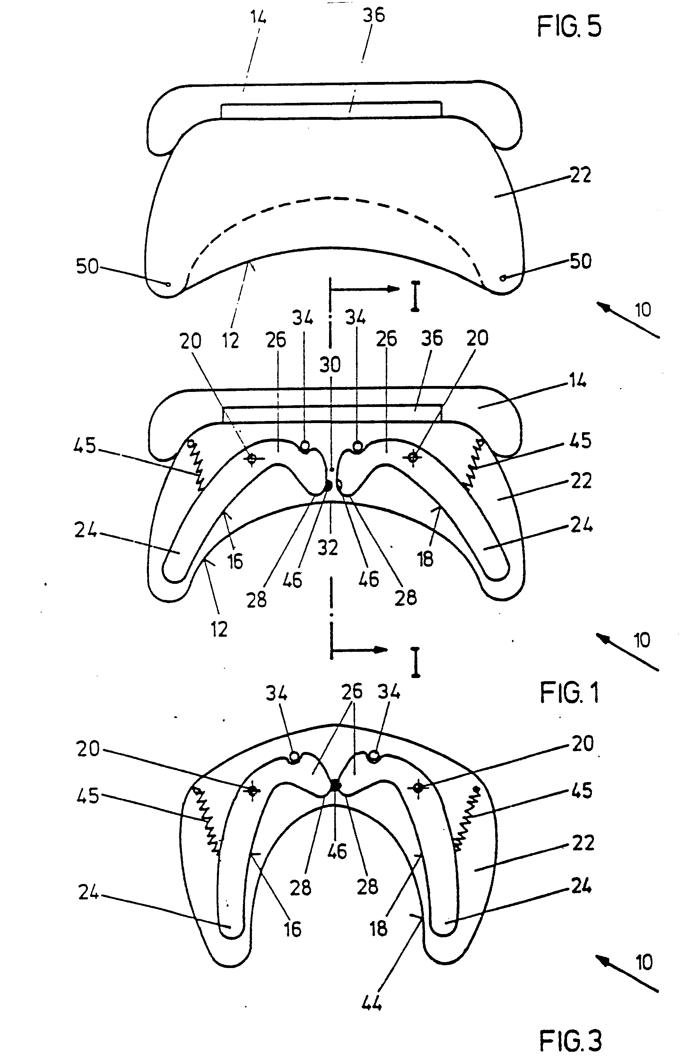

Eine Vorrichtung 10 zum Schutz des Kopfes von Fahrzeuginsassen bei Unfällen ist in ihrer ersten Endstellung als Kopfstütze 12 auf der Rückenlehne 14 eines Fahrzeugsitzes befestigt. Im Inneren der Vorrichtung 10 befinden sich zwei gleich aufgebaute Hebel 16, 18, die um senkrechte Achsen 20 schwenkbar sind. Die beiden Achsen 20 sind parallel im Abstand zueinander angeordnet. Die Hebel 16, 18 sind von einem Polsterüberzug 22 umgeben. In Fig. 1 sind die Hebel 16, 18 in ihrer ersten Endstellung dargestellt, in der sie auseinandergespreizt sind. In dieser Stellung ziehen die Hebel 16, 18 den Polsterüberzug 22 nach außen, so daß dieser die Form der Kopfstütze 12 hat.

Die Hebel 16, 18 bestehen jeweils aus einem langeren Hebelarm 22 und einem kürzeren Hebelarm 26. Die kürzeren Hebelarme 26 befinden sich zwischen den beiden Achsen 20. Die längeren Hebelarme 24 sind gekrümmt und dem Umriß eines Kopfes auf einer Kopfhälfte angepaßt. Die kürzeren Hebelarme 26 sind mit Betätigungsenden 28 ausgestattet. Die Betätigungsenden 28 sind gewölbt ausgebildet und ragen in der ersten Endstellung der Hebel 16, 18 in die Richtung der Frontseite des Fahrzeugs. Durch Krümmung der kürzeren Hebelarme 26 befinden sich die Betätigungsenden 28 in Richtung der Frontseite des Fahrzeugs gesehen, vor den Achsen 20. Zwischen den Betätigungsenden 28 erstreckt sich in der ersten Endstellung der Hebel 16, 18 ein freier Raum 30. Die Betätigungsenden 28 liegen hinter dem Polsterüberzug 22 etwa in der Mitte 32 der Kopfstütze 12. Die kürzeren Hebelarme 26 der Hebel 16, 18 sind mit Wellen 34 verbunden, die senkrecht verlaufen. Über die Wellen 34 sind die Hebel 16, 18 und damit auch die Achsen 20 und der Polsterüberzug 22 an einer Platte 36 befestigt, die starr mit der Rückenlehne 14 verbunden ist.

Die Wellen 34 sind in nicht dargestellten Führungsbahnen gehalten, die sich in von der Platte 36 vorspringenden Haltern 38 befinden. Die Querschnitt der Führungsbahnen sind auf die abgesetzten Enden 42 der Wellen abgestimmt. Die nicht näher bezeichneten Enden der Achsen 20 sind in einem Rahmen 40 im Abstand zueinander gehalten.

Die Hebel 16, 18 sind aus ihrer in Fig. 1 dargestellten ersten Endstellung in eine zweite Endstellung schwenkbar, die in Fig. 3 dargestellt ist. In der zweiten Endstellung stehen sich die Betätigungsenden 28 gegenüber und berühren einander. Durch die Schwenkung befinden sich die längeren Hebelarme 24 in einem kürzeren Abstand voneinander, während die kürzeren Hebelarme 26 um die Achsen 20 ein Stück nach hinten verschoben sind. Die beiden Hebel 16, 18 bilden in der zweiten Endstellung einen ovalen Bogen. Hierdurch umgeben die Hebel 16, 18 den Kopf eines Fahrzeuginsassen von hinten und von den Seiten. Der aus federnd elastischem Material bestehende Polsterüberzug 22 paßt sich der von den Hebeln 16, 18 vorgegebenen Form an und bildet mit den Hebeln 16, 18 in deren zweiter Endstellung einen Helm 44, der den Kopf des Fahrzeuginsassen zumindest an den Seiten und hinten umgibt. Aufgrund der Schwenkung der Hebel 16, 18 in ihre zweite Endstellung verlängert sich der Abstand zwischen dem hinteren und dem vorderen Ende der Vorrichtung 10, so daß aus einer relativ flachen Kopfstütze 12 ein Helm 44 erzeugt wird, der den Kopf an den Seiten weitgehend abdeckt.

Bei der Schwenkung der Hebel 16, 18 behalten die Achsen 20 ihre gegenseitige Lage. Die Wellen 34 werden dagegen achsparallel entlang der Führungsbahnen in den Haltern 38 verschoben. Die Führungsbahnen erstrecken sich jedoch nicht längs des gesamten Verschiebeweges der Wellen 34 zwischen den beiden Endstellungen der Hebel 16, 18. In der zweiten Endstellung der Hebel 16, 18 liegen die Wellen 34 frei. Dies bedeutet, daß die zu dem Helm 44 umgeformte Vorrichtung 10 keine Verbindung mehr zu der Rückenlehne 14 hat.

Die Hebel 16, 18 werden vorzugsweise durch die Elastizität des Polsterüberzugs 22 in ihrer ersten Endstellung gehalten, in der der Polsterüberzug 22 seine kleinste Ausdehnung hat. Es ist aber auch möglich mittels Federn 45, die unter Vorspannung stehen, die Hebel 16, 18 in ihrer ersten Endlage zu halten, in der die Vorrichtung 10 eine Kopfstütze 12 bildet.

Zur Verriegelung der beiden Hebel 16, 18 in ihrer zweiten Endstellung sind zweckmäßigerweise Schnappelemente 46 vorgesehen, die ineinanderrasten. Die Schnappelemente 46 können vorzugsweise an den Enden der kürzeren Hebelarme 26 angeordnet sein. Beispielsweise sind die Schnappelemente nach Art eines Druckknopfes ausgebildet. In der zweiten Endstellung der Hebel 16, 18 halten die Schnappelemente 46 eine feste Verbindung der Hebel 16, 18 untereinander aufrecht, so daß der Helm 44 seine Form behält.

Die Hebel 16, 18 sind vorzugsweise aus einem zähen formbestandigen Kunststoff hergestellt. Zweckmäßigerweise sind die Hebel 16, 18 zu Helmhälften 48 vergrößert, die in ihrer zweiten Endstellung den Kopf von den Seiten, von hinten und von oben umgeben. Ein derartiger, aus zwei Helmhälften 48 zusammengesetzter Helm, der mit dem Polsterüberzug 22 versehen ist, ist in Fig. 4 dargestellt.

Die Fig. 5 zeigt die Vorrichtung 10 von oben. Der Polsterüberzug 22 springt oben stärker als unten in Richtung der Frontseite des Fahrzeugs vor. Unten sind nur die Seitenteile 50 des Polsterüberzugs 22 nach vorne gezogen, während der Polsterüberzug 22 im Bereich des Halses des Fahrzeuginsassen nach hinten gezogen ist. Auf diese Weise läßt sich in der zweiten Endstellung der Hebel 16, 18 mit dem Polsterüberzug 22 eine große Kopffläche abdecken.

Bei Betätigung in der Mitte 32 werden die Hebel 16, 18 aus ihrer ersten Endstellung in die zweite bewegt und darin verriegelt. Hierbei bildet sich aus der Kopfstütze 12 ein Helm 44, der nicht mehr mit der Rückenlehne des Fahrzeugsitzes verbunden ist. Die Betätigung kann beim Zurückschleudern des Kopfes infolge eines Auffahrunfalls auf die Rückseite des Fahrzeugs erfolgen. Es ist auch möglich und bei einem drohenden Unfall zweckmäßig, den Kopf gegen die Mitte 32 zu drücken, um die Kopfstütze 12 in den Helm 44 umzuwandeln. Der Helm 44 schützt seinen Träger nicht nur wie die bekannten Schutzvorrichtungen bei einem Aufprall auf den hinteren Teil des Fahrzeugs, sondern auch bei rechtzeitiger Betätigung vor einem Umfall bei seitlichem Aufprall oder bei einem Aufprall von vorne. Nach dem ersten Aufprall bleibt der Kopf des Fahrzeuginsassen während der folgenden Bewegungen des Fahrzeugs geschützt. Beispielsweise werden Verletzungen infolge von Überrollen des Fahrzeugs, Überschlagen, Abstürzen an Böschungen oder bei Mehrfachkarambolagen gemildert oder verhindert.

Die Umwandlung der Kopfstütze 12 in den Helm 44 wird durch die im Inneren des Polsterüberzugs 22 angeordnete Mechanik bei Betätigung in der Mitte 32 ausgelöst.

## Patentansprüche

1. Vorrichtung zum Schutz des Kopfes von Fahrzeuginsassen bei Unfällen, die in einer ersten Endstellung als Kopfstütze (12) ausgebildet ist, die einen Polsterüberzug (22) hat, dadurch gekennzeichnet, daß bei Kraftausübung auf die der Frontseite des Fahrzeugs zugewandte Mitte (32) der Kopfstütze (12) zwei im Inneren des Polsterüberzugs (22) schwenkbar angeordnete Hebel (16, 18) aus ihrer ersten Endstellung unter Mitnahme des Polsterüberzugs (22) in eine zweite Endstellung schwenkbar sind, in der die Hebel (16, 18) und der Polsterüberzug (22) einen zumindest den hinteren Teil und die beiden Seiten des Kopfes umgebenden Helm (44) bilden.

2. Vorrichtung nach Anspruch 1, dadurch gekennzeichnet, daß die Kopfstütze (12) mit der Rückenlehne (14) des jeweiligen Insassensitzes verbunden ist und daß der durch die Umformung der Kopfstütze (12) gebildete Helm (44) vom Insassensitz gelöst ist.

3. Vorrichtung nach Anspruch 1 oder 2, dadurch gekennzeichnet, daß die im Polsterüberzug angeordneten beiden Hebel (16, 18) die den Umrissen des Kopfes entsprechend gekrümmt sind, um zwei parallel zueinander verlaufende Achsen (20) schwenkbar sind, daß die Hebel (16, 18) an ihren einander zugewandten Enden zwei der Frontseite des Fahrzeugs zugewandte Betätigungsenden (28) aufweisen und daß die Hebel (16, 18) mit dem sie umgebenden Polsterüberzug (22) in der ersten Endstellung auseinandergespreizt und in der zweiten Endstellung unter Freilassung eines ovalen Bogens einander zugewandt sind.

4. Vorrichtung nach einem der vorausgehenden Ansprüche, dadurch gekennzeichnet, daß die Hebel (16, 18) je mit einer Welle (34) verbunden sind, die in einer mit der Rückenlehne des jeweiligen Fahrzeugsitzes verbundenen Führungsbahn verschiebbar angeordnet ist, die sich nur über einen Teil des Verschiebeweges der Welle (34) erstreckt.

5. Vorrichtung nach einem der vorausgehenden Ansprüche, dadurch gekennzeichnet, daß die Hebel (16, 18) zu Helmhälften (48) erweitert sind, die in der zweiten Endstellung den hinteren Teil, die Seiten und die Oberseite des Kopfes umgeben.

6. Vorrichtung nach einem der vorausgehenden Ansprüche, dadurch gekennzeichnet, daß die beiden Hebel in der zweiten Endstellung durch Schnappelemente (46) miteinander verriegelt sind.

7. Vorrichtung nach einem der vorausgehenden Ansprüche, dadurch gekennzeichnet, daß die Hebel (16, 18) mit Federn (45) verbunden sind, durch deren Vorspannung die Hebel (16, 18) in ihrer ersten Endstellung gehalten sind.

8. Vorrichtung nach einem der Ansprüche 1 bis 6, dadurch gekennzeichnet, daß der Polsterüberzug (22) aus federnd elastischem Material besteht.

9. Vorrichtung nach Anspruch 6, dadurch gekennzeichnet, daß die Schnappelemente (46) an den Enden der kürzeren Hebelarme (26) angeordnet sind.

10. Vorrichtung nach einem der vorausgehenden Ansprüche, dadurch gekennzeichnet, daß die Hebel (16, 18) aus zähem, formbestandigem Kunststoff bestehen.

## Claims

1. Device for the protection of the head of vehicle passengers during accidents, which in a first position is developed as a head support (12) with a padded cover (22) characterised in that with the exertion of force on the centre (32) of the head support (12) facing the front of the vehicle two levers (16, 18) arranged inside the padded cover (22) in a swivelling manner can be swung out of their first position, taking with them the padded cover (22), into a second position, in which the levers (16, 18) and the padded cover (22) form a helmet (44) enclosing at least the rear part and both sides of the head.

2. Device according to claim 1 characterised in that the head support is joined to the back rest (14) of the relevant passenger seat and that the helmet (44) formed by the conversion of the head support (12) is separate from the passenger seat.

3. Device according to claim 1 or 2 characterised in that the two levers (16, 18) arranged in the padded cover are bent to correspond to the shape of the head, can be swivelled around two axles (20) running parallel to each other, that on the ends of the levers (16, 18) facing each other there are two operating ends (28) facing towards the front of the vehicle and that the levers (16, 18) together with the padded cover enclosing them are spread apart in the first position and are facing each other in the second position with an oval arch being left free.

4. Device according to one of the previous claims characterised in that the levers (16, 18) are connected to a shaft (34) which is arranged in a displaceable manner in a guide track connected with the back rest of the relevant passenger seat, said guide track extending only over a part of the displaceable path of the shaft (34).

5. Device according to one of the previous claims characterised in that the levers (16, 18) are extended to helmet halfs (43) which surround the rear part, the sides and the top of the head in the second position.

6. Device according to one of the previous claims characterised in that in the second position the two levers are locked together *via* snapping elements (46).

7. Device according to one of the previous claims characterised in that the levers (16, 18) are joined with springs (45), *via* whose prestress the levers (16, 18) are held in their first position.

8. Device according to one of the claims 1 to 6 characterised in that the padded cover (22) consists of springy elastic material.

9. Device according to claim 6 characterised in that the snapping elements (46) are arranged on the ends of the shorter lever arms (26).

10. Device according to one of the previous claims characterised in that the levers (16, 18) consist of tough plastic with stability of shape.


**Revendications**

1. Dispositif pour protéger la tête des occupants d'un véhicule en cas d'accident, dispositif qui, dans une première position terminale, revêt la forme d'un appui-tête comportant un revêtement de rembourrage, dispositif caractérisé en ce que, lorsqu'un effort s'exerce sur le milieu (32), tourné vers le côté frontal du véhicule, de l'appui-tête (12), deux leviers (16, 18), disposés de façon à pouvoir pivoter à l'intérieur du revêtement de rembourrage (22), sont susceptibles de pivoter à partir de leur première position terminale, en entraînant le revêtement de rembourrage (22), dans une seconde position terminale, dans laquelle les leviers (16, 18) et le revêtement de rembourrage (22) constituent un casque (44) entourant au moins la partie arrière et les deux côtés de la tête.

2. Dispositif selon la revendication 1, caractérisé en ce que l'appui-tête (12) est relié au dossier (14) du siège de l'occupant considéré, tandis que le casque (44) résultant de la transformation de cet appui-tête (12) est séparé du siège de l'occupant.

3. Dispositif selon la revendication 1 ou 2, caractérisé en ce que les deux leviers (16, 18), disposés dans le revêtement de rembourrage et qui sont courbés d'une façon correspondant au contour de la tête, sont susceptibles de pivoter autour de deux axes (20) parallèles entre eux, ces leviers (16, 18) comportant, à leurs extrémités en regard l'une de l'autre, deux extrémités d'actionnement (28) tournées vers le côté frontal du véhicule, et les leviers (16, 18) avec le revêtement de rembourrage (22) qui les entourent, étant écartés l'un de l'autre dans la première position terminale, tandis que dans la seconde position terminale, ils sont tournés l'un vers l'autre en laissant libre un arc ovale.

4. Dispositif selon une des précédentes revendications, caractérisé en ce que les leviers (16, 18) sont chacun reliés à un arbre (34) qui est disposé de façon à pouvoir coulisser dans une glissière reliée au dossier du siège considéré du véhicule, cette glissière ne s'étendant que sur une partie de la course de coulissement de l'arbre (34).

5. Dispositif selon une des précédentes revendications, caractérisé en ce que les leviers (16, 18) sont élargis pour constituer des moitiés (48) du casque, ces moitiés entourant, dans la seconde position terminale, les côtés, la partie arrière et la partie supérieure de la tête.

6. Dispositif selon une des précédentes revendications, caractérisé en ce que, dans la seconde position terminale, les deux leviers (16, 18) sont verrouillés ensemble par des éléments d'encliquetage (46).

7. Dispositif selon une des précédentes revendications, caractérisé en ce que les leviers (16, 18) sont reliés à des ressorts (45), dont la précontrainte maintient ces leviers (16, 18) dans leur première position terminale.

8. Dispositif selon une des revendications 1 à 6, caractérisé en ce que le revêtement de rembourrage est constitué d'un matériau élastique.

9. Dispositif selon la revendication 6, caractérisé en ce que les éléments d'encliquetage (46) sont disposés aux extrémités des bras de levier les plus courts (26).

10. Dispositif selon une des précédentes revendications, caractérisé en ce que les leviers (16, 18) sont constitués d'une matière synthétique tenace, résistant à la déformation.

FIG. 2

FIG. 4

0 142 822

FIG. 5

FIG. 1

FIG. 3